# EUROPÄISCHE PATENTSCHRIFT

(11) **EP 4 377 863 B1**
(45) Veröffentlichungstag und Bekanntmachung des Hinweises auf die Patenterteilung: **10.12.2025**
(21) Anmeldenummer: 22760679.5
(22) Anmeldetag: 29.07.2022
(51) Int. Cl.: G06Q 20/32, G07F 7/06

(54) **HYBRIDES VERRIEGELUNGSSYSTEM FÜR EINEN EINKAUFSWAGEN**
HYBRID LOCKING SYSTEM FOR A SHOPPING CART
SYSTÈME DE VERROUILLAGE HYBRIDE POUR CHARIOT DE SUPERMARCHÉ

(30) Priorität: 29.07.2021 DE 102021119711
(43) Veröffentlichungstag der Anmeldung: 05.06.2024
(73) Patentinhaber: Wanzl GmbH & Co. Kg, 89340 Leipheim (DE); JustTec GmbH, 82031 Grünwald (DE)
(72) Erfinder: SCHADHAUSER, Martin, 81927 München (DE); STÖCKLE, Dieter, 89361 Landensberg (DE); DAMINGER, Johann, 89233 Neu-Ulm (DE)
(86) Internationale Anmeldenummer: PCT/EP2022/071387
(87) Internationale Veröffentlichungsnummer: WO 2023/006962

(56) Entgegenhaltungen:
- EP-A1- 3 163 523
- WO-A1-2021/224468
- AU-A4- 2010 100 636
- CN-A- 108 824 997
- CN-A- 109 493 501
- DE-A1- 102017 001 920
- DE-U1- 20 316 365
- DE-U1- 202017 003 559
- DE-U1- 202018 003 172

## Beschreibung

### GEBIET DER ERFINDUNG

Die vorliegende Erfindung betrifft eine Verriegelungsvorrichtung, die an einem Einkaufswagen fixiert ist, wodurch jeweils zwei Einkaufswägen miteinander lösbar verbunden werden können, einen Einkaufswagen mit einer Verriegelungsvorrichtung und ein Verfahren zum lösbaren Verbinden eines Transportwagens.

### HINTERGRUND DER ERFINDUNG

Im Stand der Technik ist bekannt, durch ein Münzpfandschloss die Einkaufswägen eines Supermarkts lösbar zu verbinden. Hierdurch kann verhindert werden, dass einzelne Einkaufswägen aus dem Bereich des Supermarkts gebracht werden und damit nicht mehr den Kunden des Supermarkts zur Verfügung stehen. Das Münzpfandschloss kann durch ein Pfand, insbesondere ein 1-Euro-Stück, geöffnet werden, wodurch dem Kunden ein einzelner Einkaufswagen für seinen Einkauf zur Verfügung steht. Bei den Dokumenten US 20070187208 A1 und US 5421445 werden Münzpfandschlösser beschrieben, bei denen mit einer Geldmünze eine Hebelwirkung gegen Federkräfte erzeugt wird, um einen Pin/Schlüssel eines Einkaufswagens auszulösen. Die beiden Dokumente US 20190218830 A1 und die CH 87 910 A zeigen doppelt exzentrische Scheiben, deren Drehung um 90° zu einem Ein- oder Ausgreifen von Greifarmen aus einer Verjüngung oder einer Einschnürung eines Pins genutzt werden.

Das Dokument CN 109 493 501 A offenbart ein elektronische Einkaufswagenschloss mit einem Gehäuse, wobei in dem Gehäuse eine Schließvorrichtung, ein drahtloses Kommunikationsmodul und ein Stromversorgungsmodul angeordnet sind. Die AU 2010 100 636 A4 beschreibt ein münzbetätigtes Schloss für einen Einkaufswagen und ein unteres Gehäuseelement, das an einem Handgriff des Einkaufswagens befestigt ist, und ein oberes Gehäuseteil, das mit dem unteren Gehäuseteil verbunden ist. Das Dokument DE 10 2017 001920 A1 beschreibt eine Einrichtung zum Festlegen oder Freigeben eines mechanischen Bauteils, insbesondere eines Bauteils eines Einkaufswagens, mit zumindest einem beweglichen Riegelelement, das zumindest ein mobiles kurzstreckenfunkfähiges Datengerät umfasst und wobei dem Riegelelement ein Antrieb zugeordnet ist, dessen Betriebsenergie durch induktive Kurzstreckenübertragung von dem mobilen Datengerät nach Annäherung des Datengerätes an das Riegelelement bereitgestellt wird, wobei auf dem Datengerät etwa zeitgleich ausgelöst durch zumindest einen Kurzstreckenfunk eine Anwendung für eine Begleitung der nachfolgenden Verwendung des Bauteils gestartet wird. Das Dokument DE 20 2017 003559 U1 beschreibt ein berührungsloses Öffnen eines Schlosses für Einkaufswagen, wobei Öffnungs- und Schließmechanik des Schlosses mit einem 3-5 Volt Micro-Elektromotor verbunden ist, der bei jedem Impuls eine Drehung durchführt. Das Dokument CN 108 824 997 A zeigt eine Verriegelungseinheit für einen Einkaufswagen, das als ein hybrides System aufgebaut ist, und daher mit einer Münze und mit einem elektromagnetischen Signal zur Freigabe des Schlüssels veranlasst werden kann.

### ZUSAMMENFASSUNG DER ERFINDUNG

Das Münzpfandsystem hat sich bewährt, um ein missbräuchliches Entwenden von einzelnen Einkaufswägen zu verhindern. Allerdings hat der Kunde nicht jederzeit gerade das passende Münzstück zur Hand. In diesen Fällen muss der Supermarkt eine Wechselmöglichkeit bereitstellen, wodurch beispielsweise die Kassenmitarbeiter in ihrem Arbeitsfluss beeinträchtigt werden können.

Eine Aufgabe der Erfindung ist es daher, eine Vorrichtung und ein Verfahren zur Verfügung zu stellen, das eine weitere Möglichkeit zum Herauslösen eines Einkaufswagens aus einer Verkettung von Einkaufswägen zur Verfügung stellt bzw. eine alternative Möglichkeit anbietet, um ohne das Bereitstellen eines Pfands einen Einkaufswagen aus einem Pulk von Einkaufswägen herauszulösen.

Als erster Aspekt der Erfindung wird eine hybride Verriegelungsvorrichtung eines Transportwagens, insbesondere Einkaufswagens, zum lösbaren Verbinden mit einem Schlüssel eines weiteren Transportwagens, wobei die Verriegelungsvorrichtung zur zumindest teilweisen Aufnahme des Schlüssels geeignet ist, wobei die Verriegelungsvorrichtung einen aufgenommenen Schlüssel durch die Eingabe einer Münze oder durch ein elektrisches oder elektromagnetisches Signal freigibt, wobei die Verriegelungsvorrichtung umfasst: einen Greifarm zum Verriegeln des Schlüssels, einen Greifarm zum Verriegeln der Münze, einen Elektromotor und/oder einen Aktuator zum Antreiben einer Exzenterscheibe zum Initiieren einer Lösebewegung eines Schiebers, eine Empfangseinheit zur Kommunikation mit einer Sendeeinheit, insbesondere einem Smartphone, über beispielsweise Bluetooth, Near Field Communication oder WLAN, wobei die Empfangseinheit den Motor über das elektrische oder elektromagnetische Signal ansteuert, wobei durch das Einführen der Münze in die Verriegelungsvorrichtung ein Münzschieber den Schieber zur Lösebewegung veranlasst, wobei der Münzschieber eine erste geneigte Fläche aufweist, die mit einer zweiten geneigten Fläche des Schiebers zur Erzeugung der Lösebewegung zusammenwirkt, wobei die Lösebewegung des Schiebers zur Freigabe eines Auswurfelements führt, wodurch sich der Greifarm öffnet und den aufgenommenen Schlüssel freigibt.

Die erfindungsgemäße Vorrichtung eröffnet dem Kunden zwei Möglichkeiten, einen Einkaufswagen aus einem Pulk abzusondern, nämlich mit einer Münze oder mit einem elektromagnetischen Signal, das durch ein Smartphone erzeugt wird.

Als zweiter Aspekt der Erfindung wird ein Einkaufswagen mit einer Verriegelungsvorrichtung nach einem der Ansprüche 1 bis 4 zur Verfügung gestellt..

Als dritter Aspekt der Erfindung wird ein Verfahren zum lösbaren Verbinden eines ersten Transportwagens, insbesondere eines Einkaufswagens, mit einem zweiten Transportwagen zur Verfügung gestellt, wobei der erste und der zweite Transportwagen eine Verriegelungsvorrichtung nach einem der Ansprüche 1 bis 4 aufweist, umfassend die Schritte: Entriegeln eines Schlüssels aus der Verriegelungsvorrichtung durch eine Lösebewegung eines Schiebers, wobei die Lösebewegung durch einen Elektromotor und/oder einen Aktuator oder eine in die Verriegelungsvorrichtung eingeführte Münze veranlasst wird..

Beispielhafte Ausführungsformen werden in den abhängigen Ansprüchen beschrieben.

In einer weiteren erfindungsgemäßen Ausführungsform wird eine Verriegelungsvorrichtung zur Verfügung gestellt, wobei die erste geneigte Fläche und die zweite geneigte Fläche jeweils einen Winkel von 48° aufweisen.

Durch einen bevorzugten Winkel von 48° wird ein problemloses Aneinandergleiten der geneigten Flächen ermöglicht.

Durch das Anordnen von geneigten Flächen kann eine Bewegung nach oben in eine seitliche Bewegung gewandelt werden, sodass das Einschieben einer Pfandmünze zu einer seitlichen Bewegung (Lösebewegung) des Schiebers führt.

Gemäß einem weiteren Ausführungsbeispiel der vorliegenden Erfindung wird eine Verriegelungsvorrichtung zur Verfügung gestellt, wobei das Auswurfselement durch das Einführen des Schlüssels in die Verriegelungsvorrichtung in eine Verhakung mit dem Schieber geführt wird und/oder wodurch das Auswurfselement federvorgespannt wird und/oder wobei die Verhakung durch die Lösebewegung des Schiebers auflösbar ist.

In einer weiteren erfindungsgemäßen Ausführungsform wird eine Verriegelungsvorrichtung zur Verfügung gestellt, wobei das Auswurfselement eine Anschlagsfläche aufweist, auf der eine Anschlagsfläche des Greifelements aufliegt, solange das Auswurfselement mit dem Schieber eine Verhakung aufweist, sodass der Greifarm den Schlüssel verriegelt und/oder wobei der Greifarm federvorgespannt ist.

Als eine Idee der Erfindung kann angesehen werden, eine Verriegelungsvorrichtung für einen Einkaufswagen zur Verfügung zu stellen, die neben der Verwendung eines Münzpfands die Möglichkeit bietet, mit einem Smartphone einen verriegelten Schlüssel aus der Verriegelungsvorrichtung herauszulösen. Hierzu enthält die Verriegelungsvorrichtung einen Empfänger, der beispielsweise eine Verbindung zum Smartphone des Kunden über Bluetooth oder WLAN aufbauen kann. Außerdem weist die erfindungsgemäße Verriegelungsvorrichtung einen Elektromotor auf, der das Herauslösen des betreffenden Einkaufswagens aus dem verketteten Pulk der Einkaufswägen steuert.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen:
Fig. 1 eine Schiebegriffeinheit 21 mit einer Verriegelungsvorrichtung 11, die über ein Smartphone 18 angesteuert wird, alternativ kann mit einer Münze ein Schlüssel aus der Verriegelungsvorrichtung entriegelt werden,
Fig. 2 einen Einkaufswagen 22, der die Schiebegriffeinheit 21 umfasst,
Fig. 3 eine erfindungsgemäße Verriegelungsvorrichtung 11, wobei ein Schieber 5 auf zwei Weisen angetrieben werden kann, um den Schlüssel 3 freizugeben,
Fig. 4 die Verriegelungsvorrichtung 11 in einer perspektivischen Darstellung mit einem Elektromotor 2 und einem Münzschieber 8 zum Bewegen des Schiebers 5,
Fig. 5 einen Schlüssel 3, der in eine Verriegelungsvorrichtung 11 eingeführt ist, wobei der Schlüssel 3 durch die Eingabe der Münze 9 freigegeben werden kann,
Fig. 6 einen freigegebenen Schlüssel 3 nach der Eingabe der Münze 9,
Fig. 7 eine Explosionsdarstellung der erfindungsgemäßen Verriegelungsvorrichtung 11,
Fig. 8 eine weitere schematische Darstellung der Verriegelungsvorrichtung 11,
Fig. 9 eine schematische Darstellung einer erfinderischen Ausführungsform mit nur einer Feder,
Fig. 10 den Schieber 5 mit dem Münzschieber 8, wobei die geneigten Flächen einen vertikalen Abschnitt 25 aufweisen,
Fig. 11 einen Abschnitt des Münzschiebers 8 mit einer geneigten Fläche 14, die einen vertikalen Abschnitt 25 aufweist,
Fig. 12 einen Batteriehalter zur Energieversorgung des Verriegelungssystems und
Fig. 13 eine Vergrößerung eines Teils des Batteriefachs 30 mit den Kontakten 31.

### DETAILLIERTE BESCHREIBUNG BEISPIELHAFTER AUSFÜHRUNGSFORMEN

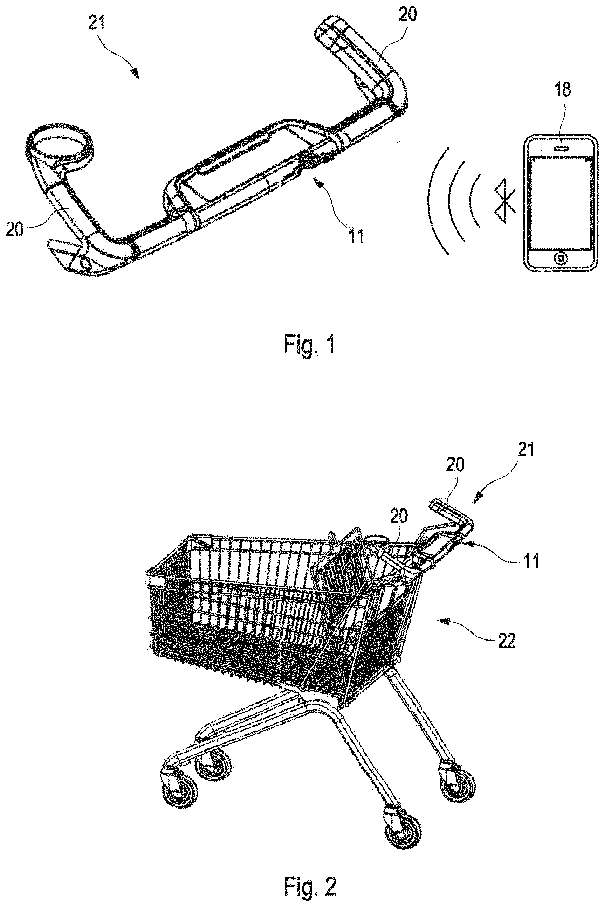

Fig. 1 zeigt eine Schiebegriffeinheit 21 eines Einkaufswagens 22, an der eine Verrieglungsvorrichtung 11 angeordnet ist, durch die sich, bei jeweiliger Anordnung einer Verriegelungsvorrichtung 11 an einem Einkaufswagen, eine sequentielle, lösbare Verkettung von Einkaufswägen 22 ergeben kann. Die Verriegelungsvorrichtung 11 kann alternativ zu einem konventionellen Münzpfandschloss eingesetzt werden. Ein Münzpfandschloss löst die Verbindung eines Einkaufswagens zu einem Pulk von Einkaufswägen, falls in das Pfandschloss ein Pfand, insbesondere ein 1-Euro-Stück, eingeführt wird. Erfindungsgemäß wird das Herauslösen des Einkaufswagens aus einer Verkettung durch eine Sendeeinheit, insbesondere ein Smartphone gesteuert, nachdem durch das Smartphone der Benutzer des Smartphones autorisiert wurde. Die erfindungsgemäße Smartphone-gesteuerte Verriegelungsvorrichtung ermöglicht es daher, auf ein Pfand zu verzichten. Insbesondere wird über ein Smartphone 18 die Verriegelungsvorrichtung 11 beispielsweise über eine Bluetooth- oder eine WLAN-Verbindung angesteuert.

Fig. 2 zeigt einen Einkaufswagen 22, an dessen Schiebegriffeinheit 21 eine Verriegelungsvorrichtung 11 angeordnet ist, wobei ein konventionelles Münzpfandschloss durch eine erfindungsgemäße Smartphone-gesteuerte Verriegelungsvorrichtung ersetzt werden kann. Hierdurch ist ein Nachrüsten eines konventionellen Einkaufswagens 22 mit einem Pfandschloss durch eine Smartphone-gesteuerte Verriegelungsvorrichtung 11 möglich. Die erfindungsgemäße Smartphone-gesteuerte Verriegelungsvorrichtung 11 kann in der Schiebegriffeinheit 21 oder in einer Promobox, die zusätzlich an der Schiebegriffeinheit 21 angeordnet ist, untergebracht werden. Eine Promobox dient insbesondere der Bewerbung von Produkten oder Dienstleistungen.

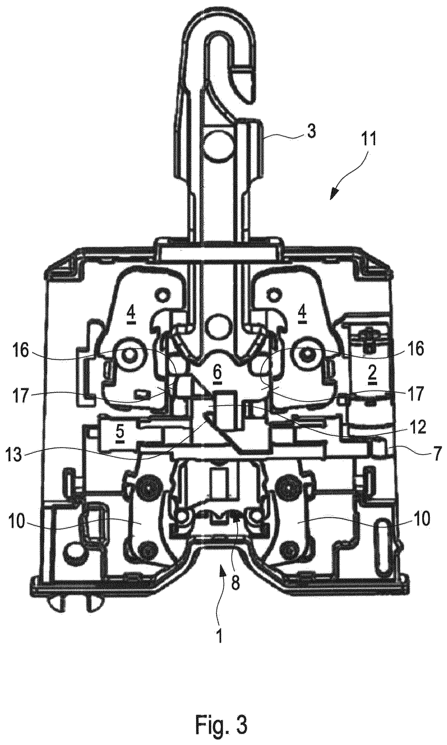

Fig. 3 zeigt eine Verriegelungsvorrichtung 11, die an einem Einkaufswagen angeordnet werden kann. Die Verriegelungsvorrichtung 11 ist als eine hybride Vorrichtung ausgebildet, das bedeutet, dass der Schlüssel 3 auf zumindest zwei Varianten freigegeben werden kann. Zum einen kann in die Aufnahmeöffnung 1 eine Münze eingeschoben werden, wodurch der Münzschieber 8 nach oben (bezüglich der Zeichnungsebene) drückt und mit dem Schieber 5 interagiert. Zusätzlich kann der Schieber 5 durch einen Elektromotor 2 mittels einer Exzenterscheibe 7 oder einer anderen bevorzugten Form / Bewegung angetrieben werden, wodurch der Schlüssel 3 außerdem aus der Verriegelungsvorrichtung 11 hinausgeworfen wird. Außerdem sind die beiden Anschlagsflächen 16 und 17 dargestellt. Im eingefahrenen Zustand des Auswurfselements 6 liegt seine Anschlagsfläche 17 auf der Anschlagsfläche 16 des Greifarms 4, wodurch die Greifarme 4 geschlossen bleiben. Wird das Auswurfselement 6 durch die sich entspannende Feder nach Freigabe durch den Schieber 5 nach oben (bezüglich der Zeichnungsebene) gedrückt, so liegen die Anschlagsflächen 16 der Greifarme 4 nicht mehr auf den Anschlagsflächen 17 des Auswurfelements 6 auf und die Greifarme 4, die federvorgespannt sind, öffnen sich und der Schlüssel 3 wird freigegeben.

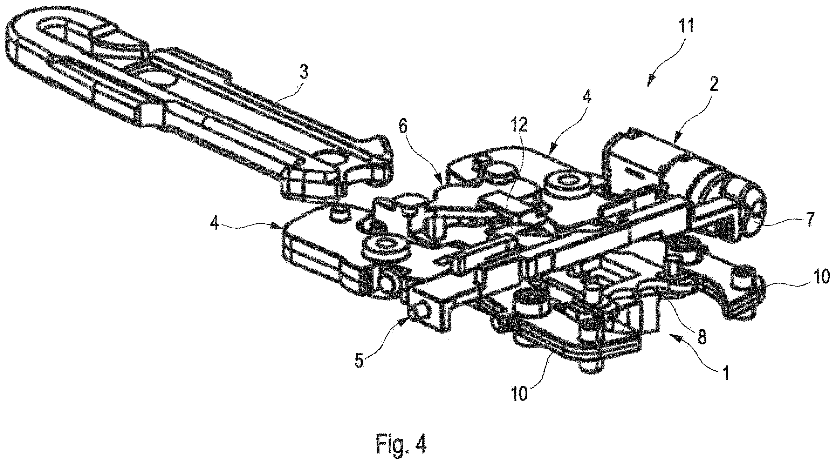

Fig. 4 zeigt die erfindungsgemäße Verriegelungsvorrichtung 11 in einer perspektivischen Darstellung, bei der ein Schlüssel 3 in die Verriegelungsvorrichtung 11 eingeführt werden kann. Der eingeführte Schlüssel 3 wird durch die Greifarme 4 gehalten. Durch das Einführen des Schlüssels 3 wird das Auswurfelement 6 in die Verriegelungsvorrichtung 11 hinein gedrückt, wodurch eine Feder zusammengepresst wird. Das Auswurfelement 6 ist daher federvorgespannt. Außerdem wird ein Haken 13 des Auswurfelements 6 von einem Haken 12 des Schiebers 5 gegriffen, wodurch das Auswurfelement 6 gegen die Spannung der Feder zurückgehalten wird. Der Schlüssel 3 kann auf zweierlei Weise freigegeben werden. Zum einen kann durch den Münzschieber 8 der Schieber 5 bewegt werden. Durch das Eindrücken einer Münze in die Aufnahmeöffnung 1 wird der Münzschieber 8 zum Schlüssel 3 hin gedrückt, wobei die Greifarme 4 geöffnet werden, wodurch der Schlüssel 3 freigegeben wird und wobei der Schieber 5 bewegt wird und dadurch das Auswurfelement 6 freigegeben wird. Außerdem kann dem Elektromotor 2 ein elektromagnetisches Signal gesendet werden, beispielsweise durch ein Smartphone, wodurch der Elektromotor 2 eine Exzenterscheibe 7 antreibt, die eine Verschiebung des Scheibers 5 in einer Weise veranlasst, dass der Haken 12 des Schiebers 5 den Haken 13 des Auswurfelements 6 freigibt. Nach Freigabe des Hakens 13 entspannt sich die Feder des Auswurfelements 6 und drückt das Auswurfelement 6 vorwärts, wodurch der Schlüssel aus der Verriegelungsvorrichtung 11 geworfen wird. Der Elektromotor 2 treibt die Exzenterscheibe 7 eine, oder mehrere, volle Umdrehungen, an, wodurch die Exzenterscheibe 7 wieder in der Ausgangsposition ist.

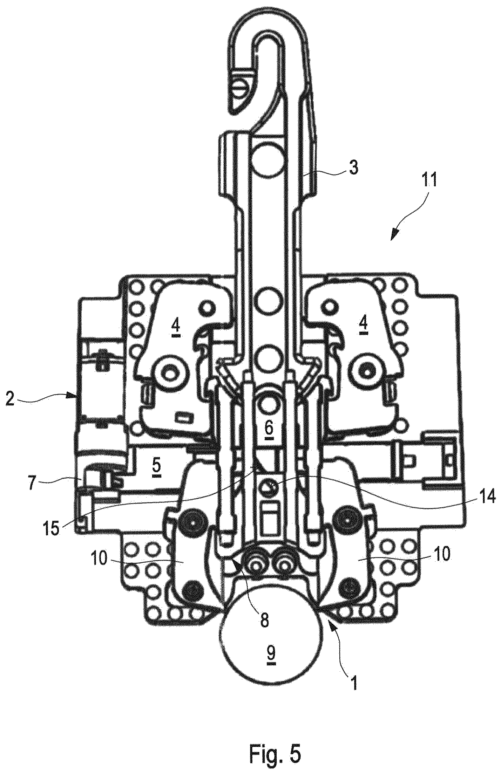

Fig. 5 zeigt eine Verriegelungsvorrichtung 11 mit einem verriegelten Schlüssel 3. Durch das Einführen einer Münze 9 in die Aufnahmeöffnung 1 wird der Münzschieber 8 nach oben (bezüglich der Zeichnungsebene) gedrückt. Hierdurch drückt die geneigte Fläche 14 entlang der geneigten Fläche 15 des Schiebers 5, wodurch der Schieber 5 parallel nach rechts (bezüglich der Zeichnungsebene) verschoben wird und das federvorgespannte Auswurfelement 6 freigibt. Das Auswurfelement 6 drückt den Schlüssel 3 aus der Verriegelungsvorrichtung 11. Die Greifarme 10 halten die Münze 9 in der Verriegelungsvorrichtung 11 und verriegeln dadurch die Münze 9 innerhalb der Verriegelungsvorrichtung. Die geneigte Fläche 14 und die geneigte Fläche 15 können insbesondere einen bevorzugten Winkel von 48° aufweisen.

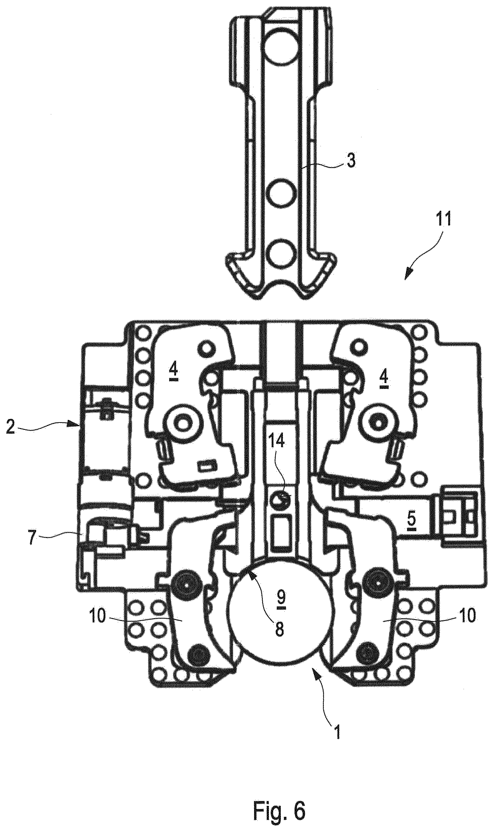

Fig. 6 zeigt einen Schlüssel 3, der aus der Verriegelungsvorrichtung 11 nach der Münzeingabe hinausgeworfen wurde.

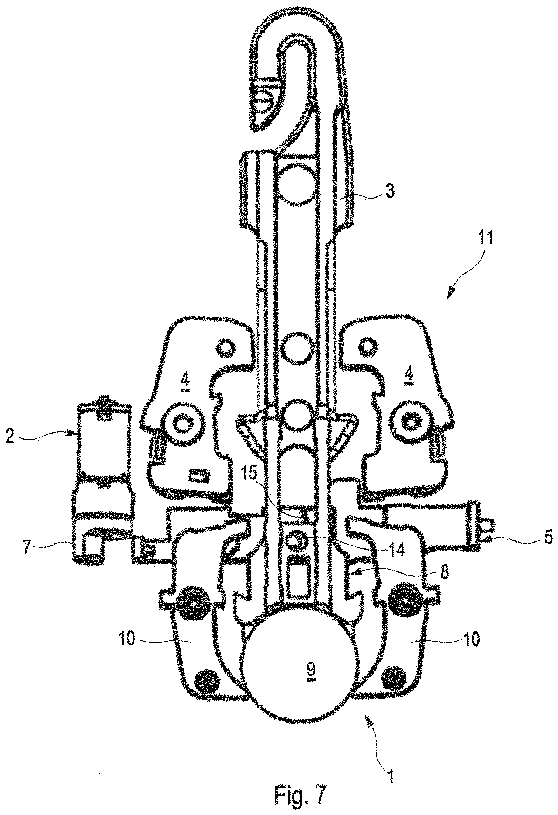

Fig. 7 zeigt die einzelnen Elemente der Verriegelungsvorrichtung in einer Explosionsdarstellung. Dargestellt ist der Schlüssel 3 mit dem Münzschieber 8 mit der geneigten Fläche 14. Die geneigte 14 ist komplementär zur geneigten Fläche 15 des Schiebers 5 ausgeformt. Außerdem sind die Greifarme 4 zum Greifen des Schlüssels 3 und die Greifarme 10 zum Greifen und Festhalten einer eingeführten Münze 9 dargestellt. Der Schieber 5 kann horizontal (bezüglich der Zeichnungsebene) bewegt werden, um das Auswurfelement 6 freizuzugeben. Eine entsprechende horizontale Bewegung des Schiebers 5 kann durch die Exzenterscheibe 7 des Elektromotors 2 und durch den Münzschieber 8 hervorgerufen werden.

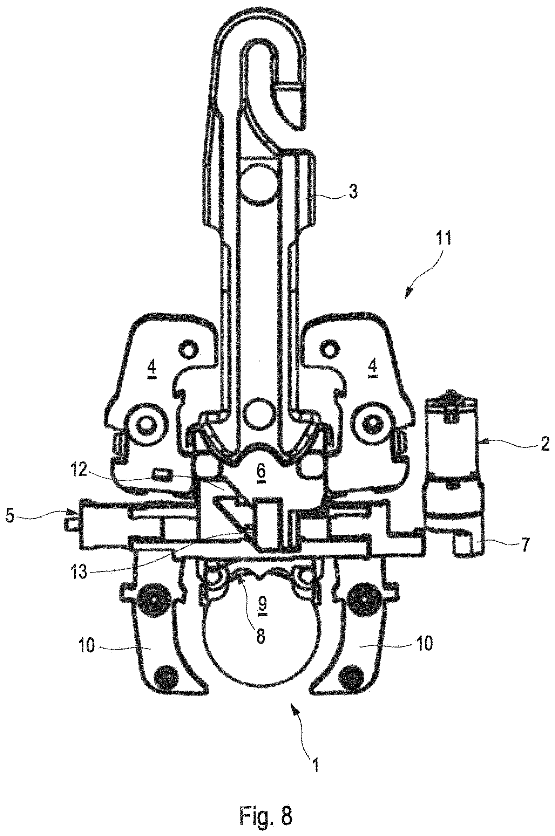

Fig. 8 zeigt einen in die Verriegelungsvorrichtung 11 eingeführten Schlüssel 3. Durch das Eindrücken des Schlüssels 3 kann einer Verhakung des Hakens 12 des Schiebers 5 mit dem Haken 13 des Auswurfelements hervorgerufen werden und der Schlüssel 3 wird in der Verriegelungsvorrichtung 11 arretiert. Hierdurch öffnen sich die Greifarme 10, wodurch die Münze 9 entnommen werden kann.

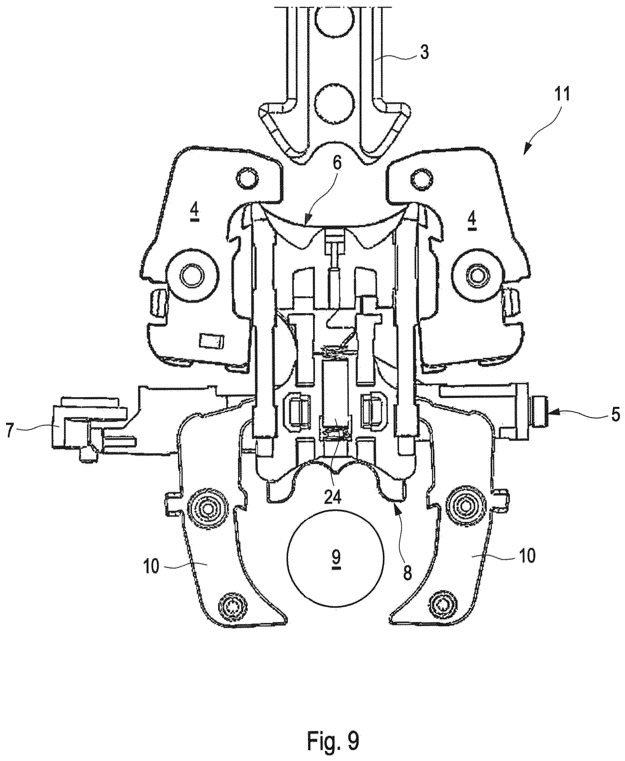

Fig. 9 zeigt eine weitere Ausführungsform der Erfindung mit nur einer Feder 24, die sowohl den Münzschieber 8 nach unten, als auch das Auswurfelement 6 nach oben drückt. Insbesondere ist die Feder 24 derart angeordnet, dass das Auswurfelement 6 beim Eindrücken des Schlüssels 3 nicht sofort zusammengepresst wird, sondern erst in einem letzten Abschnitt des Einfahrvorgangs des Schlüssels 3 in die Verriegelungsvorrichtung. Hierdurch wird sichergestellt, dass das Auswurfelement 6 nicht bereits in einem frühen Stadium des Einfahrens des Schlüssels 3 auf den Schlüssel 3 eine Auswurfkraft ausübt, sodass es nur einen möglichst späten und kurzen Bereich gibt, in dem sowohl eine Federkraft auf eine eingeschobene Münze 9 und auf den Schlüssel 3 gibt. Hierdurch soll verhindert werden, dass durch Manipulation an dem Verriegelungssystem ein gleichzeitiges Lösen sowohl des Schlüssels 3 als auch der Münze 9 ermöglicht wird.

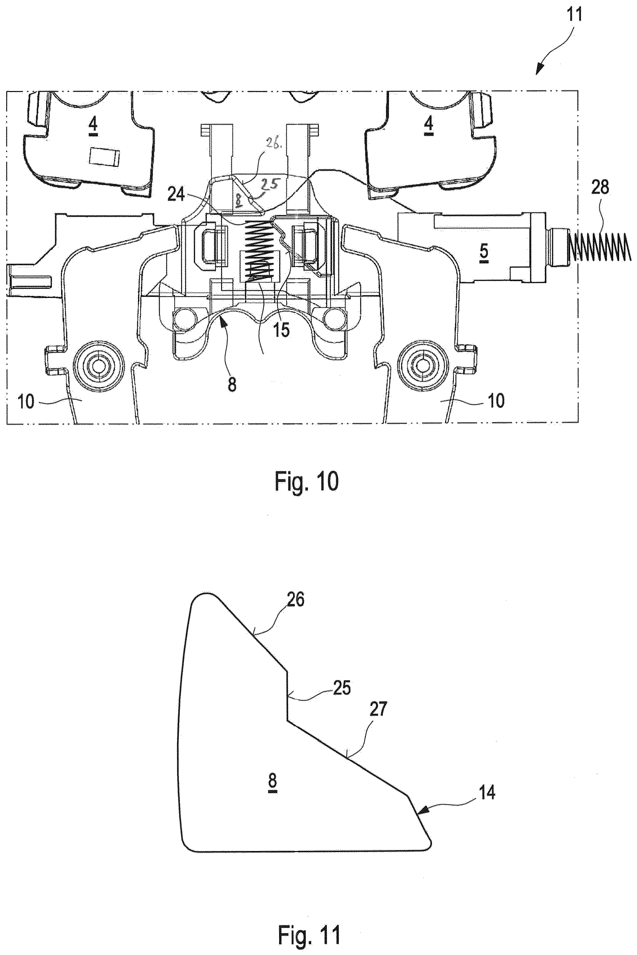

Fig. 10 zeigt einen Münzschieber 8 mit der geneigten Fläche 14, die mit der geneigten Fläche 15 des Schiebers 5 derart zusammenwirkt, dass der Schieber 5 horizontal durch eine vertikale Bewegung des Münzschiebers 8 verschoben werden kann. Es können in die geneigten Flächen 14 und/oder 15 vertikale Abschnitte 25 vorgesehen sein, durch die eine Bewegung des Schiebers 6 trotz vertikaler Bewegung des Münzschiebers 8 verhindern. Hierdurch kann insbesondere ein Zustand, in dem grundsätzlich sowohl der Schlüssel 3 als auch die Münze 9 nicht vollständig gehalten werden, sozusagen übersprungen werden.

Fig. 11 zeigt einen Teil des Münzschiebers 8 mit der geneigten Fläche 14, der Abschnitte 26 und 27 aufweist, die schräg verlaufen, sodass mit diesen Abschnitten eine vertikale Bewegung des Münzschiebers 8 in eine horizontale Bewegung des Schiebers 5 transformiert wird. Außerdem ist ein vertikaler Abschnitt 25 angeordnet, der auch bei einer vertikalen Bewegung des Münzschiebers 8 eine vertikale Bewegung des Schiebers 5 verhindert.

In einer alternativen Ausführungsform können die geneigten Flächen 14 und/oder 15 eine hohe oder eine schwache Steigung bzw. Abfall aufweisen, sodass bei einer hohen Steigung bzw. hohem Gefälle eine schnelle Bewegung des Münzschiebers 8 in eine langsame Bewegung des Schiebers 5 transformiert wird. Bei einer kleinen Steigung bzw. kleinem Gefälle kann eine langsame Bewegung des Münzschiebers 8 in eine schnelle Bewegung des Schiebers 5 transformiert werden.

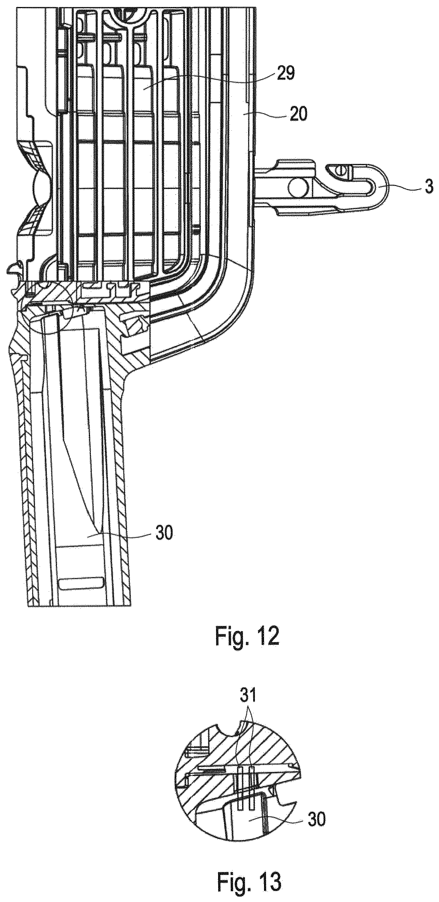

Fig. 12 zeigt die Energieversorgung des Verriegelungssystems, die durch eine Batterie bzw. einen Accu sichergestellt wird, wobei die Batterie in einem Halter derart angeordnet ist, dass das Verriegelungssystem aus der Promobox 29 entfernt werden kann, ohne dass deswegen die Batterie mit herausgezogen werden muss. Die Batterie oder die Batterien sind insbesondere in einem Batteriefach 30 angeordnet, wobei Kontakte 31 sicherstellen, dass eine Energieversorgung einer elektronischen Steuerung und eines oder mehrerer Motoren des Verriegelungssystems sichergestellt ist. Der große Vorteil der Anordnung kann darin gesehen werden, dass die Elektronik aus der Promobox 29 entnommen und eventuell repariert oder ausgetauscht werden kann, ohne dass deswegen die Batterie oder die Batterien mitentnommen oder zumindest bewegt werden müssten. Hierdurch wird eine erforderliche Reparatur vereinfacht.

Fig. 13 zeigt das Batteriefach 30 und die Kontakte 31, die eine Energieversorgung sicherstellen.

In einer besonderen Ausführungsform wird eine Notentriegelung zur Verfügung gestellt, die insbesondere erforderlich ist, falls die Feder des Verriegelungssystems gebrochen ist und ein Lösen des Schlüssels 3 dadurch nicht möglich ist. Hierdurch kann verhindert werden, dass ein einzelner defekter Einkaufswagen einen kompletten Pulk von Einkaufswägen blockieren kann, falls dessen Verriegelungssystem defekt ist. Bei der Notentriegelung sind einzelne Ausnehmungen vorgesehen, sodass eine Entriegelung händisch vorgenommen werden kann.

Ein besonderer Vorteil des erfindungsgemäßen hybriden Verriegelungssystems für einen Einkaufswagens ist es, dass das Verriegelungssystem ein konventionelles Münzpfandschloss ergänzen kann. Der Kunde kann daher wählen, ob er mit einer Münze den Schlüssel freigeben möchte oder mit einem elektromagnetischen Signal, beispielsweise von seinem Smartphone.

Die erfindungsgemäße Verriegelungsvorrichtung eines ersten Einkaufswagens kann mit einem Smartphone eine Kommunikation unterhalten, insbesondere kann durch das Smartphone veranlasst werden, dass die Verriegelungsvorrichtung des ersten Einkaufswagens einen in der Verriegelungsvorrichtung gehaltenen Pin eines zweiten Einkaufswagens entriegelt und ausgeworfen wird. Die Kommunikation kann durch Bluetooth, insbesondere Bluetooth Low Energy (BLE) oder Near Field Communication (NFC) erfolgen. Hierdurch wird berührungslos eine Kommunikation zwischen dem Smartphone eines Benutzers und der Verriegelungsvorrichtung ermöglicht. Bei der Near Field Communication (Nahfeldkommunikation) werden auf Basis eines internationalen Übertragungsstandards kontaktlos Daten mittels RFID-Technik übertragen. Hierzu werden miteinander lose gekoppelte Spulen verwendet, die durch elektromagnetische Induktion verbunden sind. Es ist daher nur eine Kommunikation über wenige Zentimeter möglich.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Aufnahmeöffnung für eine Münze
- 2: Elektromotor
- 3: Schlüssel/Pin
- 4: Greifarm für den Schlüssel 3
- 5: Schieber
- 6: Auswurfelement, insbesondere federvorgespannt
- 7: Exzenterscheibe zum Antreiben des Schiebers 5
- 8: Münzschieber
- 9: Münze
- 10: Greifarm für eine Münze 9
- 11: Verriegelungsvorrichtung an einem Einkaufswagen
- 12: Haken des Schiebers 5
- 13: Haken des Auswurfelements, der mit dem Haken des Schiebers 5 interagiert
- 14: geneigte Fläche des Münzschiebers 8
- 15: geneigte Fläche des Schiebers 5
- 16: Anschlagsfläche des Greifarms 4
- 17: Anschlagsfläche des Auswurfselements 6
- 18: Smartphone/Sendeeinheit
- 20: Griff
- 21: Schiebegriffeinheit
- 22: Transportwagen, insbesondere ein Einkaufswagen
- 23: Lager zum drehbaren Schwenken eines Greifarms 2
- 24: Feder
- 25: Stufe
- 26: vorderer Abschnitt der geneigten Fläche 14 des Münzschiebers 8
- 27: hinterer Abschnitt der geneigten Fläche 14 des Münzschiebers 8
- 28: Feder
- 29: Promobox
- 30: Batteriefach
- 31: Kontakte

## Patentansprüche

1. Hybride Verriegelungsvorrichtung (11) eines Transportwagens (22), insbesondere Einkaufswagens, zum lösbaren Verbinden mit einem Schlüssel (3) eines weiteren Transportwagens (22), wobei die Verriegelungsvorrichtung (11) zur zumindest teilweisen Aufnahme des Schlüssels (3) geeignet ist, wobei die Verriegelungsvorrichtung (11) einen aufgenommenen Schlüssel (3) durch die Eingabe einer Münze (9) oder durch ein elektrisches oder elektromagnetisches Signal freigibt, wobei die Verriegelungsvorrichtung umfasst:
einen Greifarm (4) zum Verriegeln des Schlüssels (3),
einen Greifarm (10) zum Verriegeln der Münze (9),
einen Elektromotor (2) und/oder einen Aktuator zum Antreiben einer Exzenterscheibe (7) zum Initiieren einer Lösebewegung eines Schiebers (5),
eine Empfangseinheit zur Kommunikation mit einer Sendeeinheit, insbesondere einem Smartphone (18), über beispielsweise Bluetooth, Near Field Communication oder WLAN, wobei die Empfangseinheit den Motor (2) über das elektrische oder elektromagnetische Signal ansteuert, wobei durch das Einführen der Münze (9) in die Verriegelungsvorrichtung (11) ein Münzschieber (8) den Schieber (5) zur Lösebewegung veranlasst, wobei
der Münzschieber (8) eine erste geneigte Fläche (14) aufweist, die mit einer zweiten geneigten Fläche (15) des Schiebers (5) zur Erzeugung der Lösebewegung zusammenwirkt, wobei die Lösebewegung des Schiebers (5) zur Freigabe eines Auswurfelements (6) führt, wodurch sich der Greifarm (4) öffnet und den aufgenommenen Schlüssel (3) freigibt.

2. Verriegelungsvorrichtung (11) nach Anspruch 1, wobei die geneigte Fläche (14) und die geneigte Fläche (15) jeweils einen Winkel von 48° aufweisen.

3. Verriegelungsvorrichtung (11) nach einem der Ansprüche 1 oder 2, wobei das Auswurfselement (6) durch das Einführen des Schlüssels (3) in die Verriegelungsvorrichtung (11) in eine Verhakung mit dem Schieber (5) geführt wird, die durch die Lösebewegung des Schiebers (5) auflösbar ist und/oder wodurch das Auswurfselement (6) federvorgespannt wird.

4. Verriegelungsvorrichtung (11) nach einem der Ansprüche 2 oder 3, wobei das Auswurfselement (6) eine Anschlagsfläche (17) aufweist, auf der eine Anschlagsfläche (16) des Greifarms (4) aufliegt, solange das Auswurfselement (6) mit dem Schieber eine Verhakung aufweist, sodass der Greifarm (4) den Schlüssel verriegelt und/oder wobei der Greifarm (4) federvorgespannt ist.

5. Einkaufswagen (22) mit einer Verriegelungsvorrichtung (11) nach einem der vorhergehenden Ansprüche.

6. Verfahren zum lösbaren Verbinden eines ersten Transportwagens (22), insbesondere eines Einkaufswagens, mit einem zweiten Transportwagen (22), wobei der erste und der zweite Transportwagen (22) eine Verriegelungsvorrichtung (11) nach einem der Ansprüche 1 bis 4 aufweist, umfassend die Schritte: Entriegeln eines Schlüssels (3) aus der Verriegelungsvorrichtung (11) durch eine Lösebewegung eines Schiebers (5), wobei die Lösebewegung durch einen Elektromotor (2) und/oder einen Aktuator oder eine in die Verriegelungsvorrichtung (11) eingeführte Münze (9) veranlasst wird.

## Claims

1. Hybrid locking device (11) of a transport trolley (22), in particular a shopping trolley, for detachably connecting to a key (3) of another transport trolley (22), wherein the locking device (11) is suitable for at least partially receiving the key (3), wherein the locking device (11) releases a received key (3) by inserting a coin (9) and/or by an electrical or electromagnetic signal, wherein the locking device comprises:
a gripping arm (4) for locking the key (3),
a gripping arm (10) for locking the coin (9),
an electric motor (2) and/or an actuator for driving an eccentric disc (7) to initiate a release movement of a slide (5),
a receiving unit for communicating with a transmitting unit, in particular a smartphone (18), via, for example, Bluetooth, Near Field Communication, or WLAN, wherein the receiving unit actuates the motor (2) via the electrical or electromagnetic signal, wherein, by inserting the coin (9) into the locking device (11), a coin slide (8) causes the slide (5) to release, wherein
the coin slide (8) has a first inclined surface (14) which cooperates with a second inclined surface (15) of the slide (5) to produce a release movement, wherein the release movement of the slide (5) leads to the release of the ejection element (6), as a result of which the gripping arm (4) opens and releases the received key (3).

2. Locking device (11) according to Claim 1, wherein the inclined surface (14) and the inclined surface (15) each have an angle of 48°.

3. Locking device (11) according to any one of Claims 1 or 2, wherein the ejection element (6) is guided into interlocking with the slide (5) by the insertion of the key (3) into the locking device (11), which interlocking can be released by the release movement of the slide (5) and/or as a result of which the ejection element (6) is spring-preloaded.

4. Locking device (11) according to any one of Claims 2 or 3, wherein the ejection element (6) has a stop surface (17) on which a stop surface (16) of the gripping element (4) rests as long as the ejection element (6) has an interlocking with the slide, so that the gripping arm (4) locks the key and/or wherein the gripping arm (4) is spring-preloaded.

5. Shopping trolley (22) with a locking device (11) according to any one of the preceding claims.

6. Method for detachably connecting a first transport trolley (22), in particular a shopping trolley, to a second transport trolley (22), wherein the first and second transport trolleys (22) have a locking device (11) according to any one of the preceding Claims 1 to 4, comprising the steps of: unlocking a key (3) from the locking device (11) by a release movement of a slide (5), wherein the release movement is brought about by an electric motor (2) and/or an actuator or a coin (9) inserted into the locking device (11).

## Revendications

1. Dispositif de verrouillage hybride (11) d'un chariot de transport (22), en particulier d'un chariot de supermarché, destiné à être relié de manière amovible à une clé (3) d'un chariot de transport (22) supplémentaire, le dispositif de verrouillage (11) étant adapté pour recevoir au moins partiellement la clé (3), le dispositif de verrouillage (11) libérant une clé (3) reçue par l'introduction d'une pièce de monnaie (9) ou par un signal électrique ou électromagnétique, le dispositif de verrouillage comprenant :
un bras de préhension (4) destiné à verrouiller la clé (3),
un bras de préhension (10) destiné à verrouiller la pièce de monnaie (9),
un moteur électrique (2) et/ou un actionneur destiné à entraîner un disque excentrique (7) afin de déclencher un mouvement de déblocage d'un coulisseau (5),
une unité de réception destinée à communiquer avec une unité d'émission, en particulier un smartphone (18), par exemple par le biais du Bluetooth, de la communication en champ proche ou du WiFi, l'unité de réception commandant le moteur (2) par le biais du signal électrique ou électromagnétique, l'introduction de la pièce de monnaie (9) dans le dispositif de verrouillage (11) amenant un poussoir à pièce de monnaie (8) à provoquer le mouvement de déblocage du coulisseau (5),
le poussoir à pièce de monnaie (8) possédant une première surface inclinée (14) qui coopère avec une deuxième surface inclinée (15) du coulisseau (5) pour générer le mouvement de déblocage, le mouvement de déblocage du coulisseau (5) entraînant la libération d'un élément d'éjection (6), moyennant quoi le bras de préhension (4) s'ouvre et libère la clé (3) reçue.

2. Dispositif de verrouillage (11) selon la revendication 1, la surface inclinée (14) et la surface inclinée (15) formant respectivement un angle de 48°.

3. Dispositif de verrouillage (11) selon l'une des revendications 1 ou 2, l'élément d'éjection (6) étant guidé par l'introduction de la clé (3) dans le dispositif de verrouillage (11) dans un accrochage avec le coulisseau (5), qui peut être détaché par le mouvement de déblocage du coulisseau (5) et/ou par lequel l'élément d'éjection (6) est précontraint par ressort.

4. Dispositif de verrouillage (11) selon l'une des revendications 2 ou 3, l'élément d'éjection (6) possédant une surface de butée (17) sur laquelle repose une surface de butée (16) du bras de préhension (4) tant que l'élément d'éjection (6) présente un accrochage avec le coulisseau, de sorte que le bras de préhension (4) verrouille la clé et/ou le bras de préhension (4) étant précontraint par ressort.

5. Chariot de supermarché (22) comprenant un dispositif de verrouillage (11) selon l'une des revendications précédentes.

6. Procédé pour relier de manière amovible un premier chariot de transport (22), en particulier un chariot de supermarché, à un deuxième chariot de transport (22), le premier et le deuxième chariot de transport (22) possédant un dispositif de verrouillage (11) selon l'une des revendications 1 à 4, comprenant les étapes suivantes : déverrouillage d'une clé (3) du dispositif de verrouillage (11) par un mouvement de déblocage d'un coulisseau (5), le mouvement de déblocage étant déclenché par un moteur électrique (2) et/ou un actionneur ou une pièce de monnaie (9) introduite dans le dispositif de verrouillage (11).
